# EUROPEAN PATENT SPECIFICATION

(11) **EP 4 265 483 B1**
(45) Date of publication and mention of the grant of the patent: **21.01.2026**
(21) Application number: 21906322.9
(22) Date of filing: 30.11.2021
(51) Int. Cl.: B60R 21/36

(54) **AIRBAG DEVICE FOR PROTECTING PEDESTRIANS**
AIRBAGVORRICHTUNG ZUM SCHUTZ VON FUSSGÄNGERN
DISPOSITIF DE COUSSIN DE SÉCURITÉ GONFLABLE POUR PROTÉGER DES PIÉTONS

(30) Priority: 17.12.2020 JP 2020209151
(43) Date of publication of application: 25.10.2023
(73) Proprietor: Autoliv Development AB, 44783 Vargarda (SE)
(72) Inventor: HARADA, Tomoaki, Yokohama-shi, Kanagawa 222-8580 (JP)
(74) Representative: Müller Verweyen
(86) International application number: PCT/JP2021/043801
(87) International publication number: WO 2022/130959

(56) References cited:
- CN-A- 109 094 507
- JP-A- 2003 200 800
- JP-A- 2003 291 772
- JP-A- 2007 269 169
- JP-A- 2008 254 492
- JP-A- 2014 024 364
- JP-A- 2015 136 978
- JP-A- 2019 034 619
- JP-A- H07 108 903
- JP-A- H1 120 587
- US-A- 5 813 692

## Description

### TECHNICAL FIELD

The present invention relates to a pedestrian protection airbag device provided with an airbag cushion that expands and deploys along an A-pillar of a vehicle.

### BACKGROUND ART

In recent years, pedestrian protection airbag devices have been developed to protect pedestrians outside a vehicle, as an airbag device that differs from devices that restrain occupants inside the vehicle. Typically, pedestrian protection airbag devices are configured to expand and deploy an airbag cushion from underneath a front hood or the like where there is a risk of contacting the body of a pedestrian, such as a windshield, when a sensor provided in a front portion of the vehicle or the like detects contact with a pedestrian.

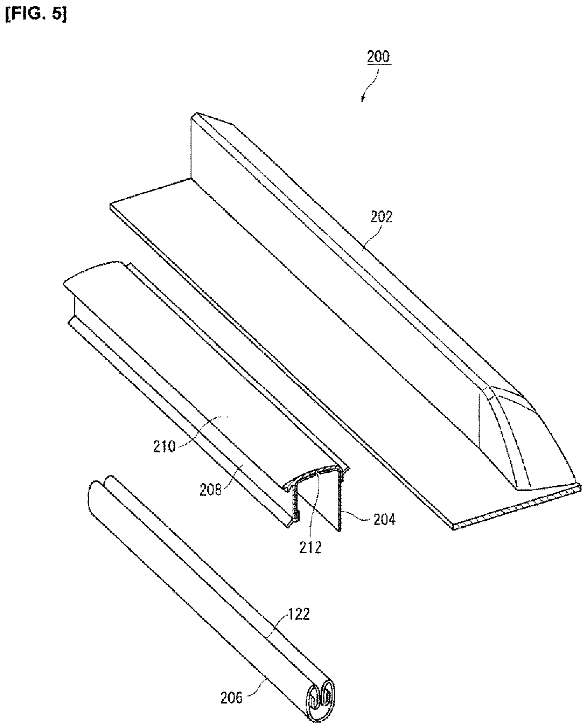

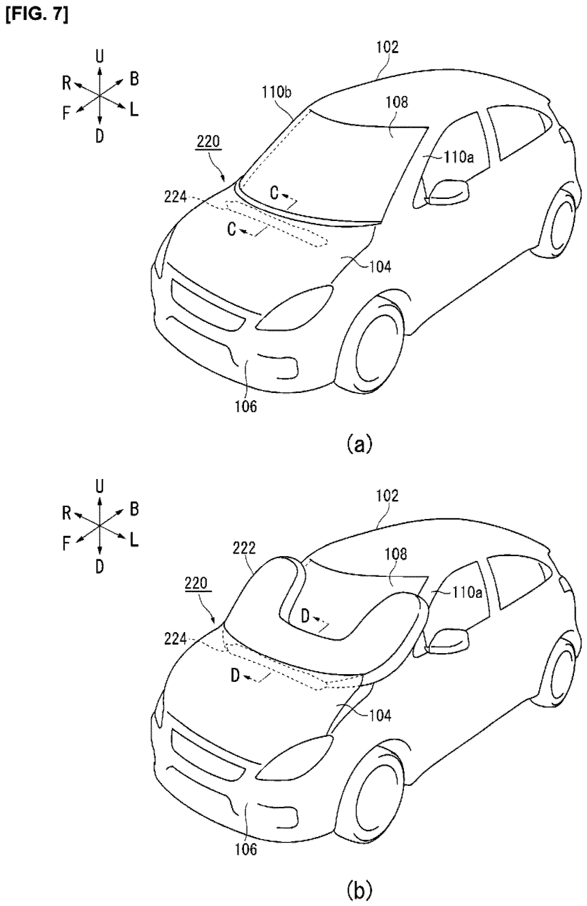

Apart from pedestrian protection airbag devices in the standard configuration described above, pedestrian protection airbag devices have also been developed for protecting a more localized area. For example, in the technology described in Patent Document 1, as illustrated in FIG. 7, airbag cushions are configured to expand and deploy in an elongated form in the front-to-back direction of a vehicle along A-pillars from respective end parts in the vehicle width direction of a front hood. As illustrated in FIG. 5, the airbag cushions are configured to be stowed along the A-pillars from the end part of the front hood.

### Related Art Documents

### Patent Documents

Patent Document 1: Chinese Patent Application Publication No. 109094507 Specification

### SUMMARY OF THE INVENTION

Current airbag devices are required to have a configuration in which an airbag cushion can quickly and smoothly expand and deploy. However, because the airbag cushion is installed in a vehicle in a compact state so as to occupy a limited stowage space, the addition of a complex mechanism or the like is difficult, and achieving quick expansion and deployment is not easy. Problem to be Solved by the Invention

In light of these problems, an object of the present invention is to provide a pedestrian protection airbag device capable of more efficiently protecting a pedestrian using a simple configuration.

### Means to Solve the Problem

A pedestrian protection airbag device as defined by claim 1 is provided in order to solve the problem described above.

The V-shaped inward fold of the airbag cushions in the stowed form refers to an inward folded state when viewed from the outside of the vehicle, that is, a state folded so as to be indented to the inside of the vehicle. With this configuration, action toward the outside of the vehicle occurs when the inward fold is released during the initial expansion and deployment of the airbag cushions, enabling efficient pushing aside of the stowing part of the airbag cushions during deployment. In particular, by using the airbag cushions, highly rigid areas at the front of the vehicle such as corners of the front hood and the A-pillars are covered, which enables efficient protection of pedestrians and the like. In addition, the airbag cushions do not block the field of vision of an occupant even when expanded and deployed, which can contribute to the safety of both the pedestrian and the occupant.

The airbag cushions expand and deploy so as to respectively extend in the front-to-back direction of the vehicle from the lower end parts of the left and right A-pillars along the end parts of the A-pillars and the front hood in the vehicle width direction. This configuration covers highly rigid areas at the front of the vehicle such as corners of the front hood and the A-pillars, which enables efficient protection of pedestrians and the like.

The airbag cushions in the stowed form described are stowed such that a leading end of the V shape faces downward in the vehicle. This configuration also allows the airbag cushions to be efficiently expanded and deployed.

The airbag cushions in the stowed form described expand and deploy by unfolding from the center in the transverse direction to both sides in the vehicle width direction such that the inward fold is released. This configuration also allows the airbag cushions to be efficiently expanded and deployed.

The pedestrian protection airbag device is further provided with housings for stowing the airbag cushions in the stowed form, which are installed in the vehicle; the housings include a main body part for stowing the airbag cushions in the stowed form, which is installed inside the A-pillars, and lids for sealing the main body part; where the lids may include a fragile part that can be cleaved by a force of the expansion and deployment of the airbag cushions.

According to the configuration described above, the airbag cushions efficiently apply a force to the fragile part, which allows the fragile part to be smoothly cleaved.

The fragile part described above is provided at a central vicinity of the lid in the vehicle width direction. Likewise, by this configuration, the airbag cushions efficiently apply the force to the fragile part, which allows the fragile part to be smoothly cleaved.

The A-pillars described above include support to the windshield from the rear direction of the vehicle, and the housings may further include a cushioning part that extends from the main body part and is inserted between the rear supports and the windshield.

According to the configuration described above, a force when a pedestrian or the like makes contact with the windshield is absorbed by the cushioning part, allowing an impact exerted upon the pedestrian or the like to be softened.

A configuration which is not part of the present invention is a pedestrian protection airbag device, including:
airbag cushions that expand and deploy so as to cover A-pillars of a vehicle, the pedestrian protection airbag device further comprising housings for stowing the airbag cushions, which are installed along the A-pillars, wherein
the housings extend along the A-pillars and include a main body part for stowing the airbag cushions and a lid on an outside of the vehicle for sealing the main body part,
the airbag cushions are stowed in the housings in a stowed form, folded in a V-shape so that the lid is folded in an inward fold, and
the housings further include a fragile part that is cleaved by a force of expansion and deployment of the airbag cushion to open the lid.

Likewise, by the configuration described above, action toward the outside of the vehicle is caused when the inward fold is released during the initial expansion and deployment of the airbag cushions, efficiently cleaving the fragile part of the housings, and allowing the expansion and deployment to be performed. As such, the configuration described above also enables efficient protection of pedestrians and the like.

A configuration which is not part of the present invention is a pedestrian protection airbag device, including:
airbag cushions that expand and deploy so as to cover the windshield of a vehicle, the pedestrian protection airbag device further comprising housings for stowing the airbag cushions, which are installed on the sides of the windshield underneath a front hood of the vehicle, wherein
the housings extend in the vehicle width direction and include a main body part for stowing the airbag cushions and a lid for sealing the side of the main body toward the rear of the vehicle,
the airbag cushions are stowed in the housings in a stowed form, and folded in a V-shape so that the lid is folded in an inward fold, and
the housings further include a fragile part that is cleaved by a force of expansion and deployment of the airbag cushion to open the lid.

Likewise, by the configuration described above, action when the inward fold is released during the initial expansion and deployment of the airbag cushions efficiently cleaves the fragile part of the housings, enabling expansion and deployment to push aside the housings.

A configuration which is not part of the present invention is a pedestrian protection airbag device, including:
airbag cushions that expand and deploy so as to cover the windshield of a vehicle, the pedestrian protection airbag device further comprising housings for stowing the airbag cushions, which are installed along the lower edge of the windshield of the vehicle, wherein
the housings include a main body part for stowing the airbag cushions that extends in the vehicle width direction and a lid for sealing an upper side of the main body part,
the airbag cushions are stowed in the housings in a stowed form, folded in a V-shape such that the lid forms an inward fold, and
the housings further include a fragile part that is cleaved by a force of expansion and deployment of the airbag cushion to open the lid.

Likewise, by the configuration described above, action when the inward fold is released during the initial expansion and deployment of the airbag cushions efficiently cleaves the fragile part of the housings, enabling expansion and deployment to push aside the housings.

### Effect of the Invention

The present invention can provide a pedestrian protection airbag device capable of efficiently protecting pedestrians via a simple configuration.

### BRIEF DESCRIPTION OF THE DRAWINGS

FIG. 1 is a diagram illustrating an outline of a pedestrian protection airbag device according to an embodiment of the present invention.
FIG. 2 is a diagram illustrating an appearance of the expansion and deployment of the airbag cushion in FIG. 1(a).
FIG. 3 is a cross section view along A-A of the airbag device in FIG. 1(a).
FIG. 4 is a diagram illustrating a modified example of the airbag device in FIG. 2(a).
FIG. 5 is a diagram illustrating a second modified example of the airbag device in FIG. 1(a).
FIG. 6 is a diagram illustrating an example of an appearance of the expansion and deployment of the airbag cushion in FIG. 5.
FIG. 7 is a diagram illustrating an outline of the pedestrian protection airbag device according to Embodiment 2 of the present invention.
FIG. 8 is a diagram illustrating an example of an appearance of the expansion and deployment of the airbag cushion in FIG. 7(a).
FIG. 9 is a diagram illustrating an outline of the pedestrian protection airbag device according to Embodiment 3 of the present invention.

### DESCRIPTION OF THE PREFERRED EMBODIMENTS

Preferred Embodiments according to the present invention will hereinafter be described in detail with reference to the attached drawings. Dimensions, materials, other specific numerical values, and the like indicated in the Embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

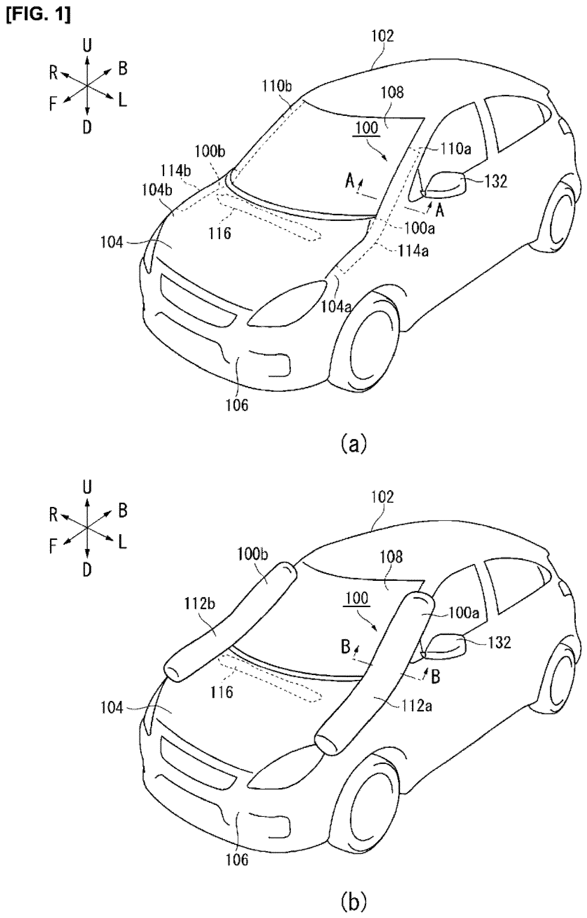

FIG. 1 is a diagram illustrating an outline of a pedestrian protection airbag device 100 according to an embodiment of the present invention. FIG. 1(a) is a diagram illustrating a vehicle 102 before the pedestrian protection airbag device 100 is activated, and FIG. 1(b) is a diagram illustrating the vehicle 102 when the pedestrian protection airbag device 100 is activated. Regarding FIG. 1 and other figures, a vehicle front-to-back direction is illustrated by the symbols F (Front) and B (Back), a vehicle width direction of the vehicle by the symbols L (Left) and R (Right), and a vehicle up-down direction by the symbols U (Up) and D (Down).

As illustrated in FIG. 1(a), a pair of the pedestrian protection airbag devices 100 of the present Embodiment (airbag devices 100a and 100b) are provided on the left and right along A-pillars 110a and 110b of the vehicle 102. The pedestrian protection airbag device 100 utilizes airbag cushions 112a and 112b (see FIG. 1(b)) to cover from the corners 104a and 104b at the front of the vehicle near a front hood 104, being highly rigid, to the A-pillars 110a and 110b, protecting pedestrians and the like from coming into contact with these areas.

The pedestrian protection airbag device 100 is provided with housings 114a and 114b for stowing the airbag cushions 112a and 112b. The housings 114a and 114b are elongated box-shaped containers formed primarily of resin, and are respectively provided starting at near the end parts of the front hood 104 (near the corners 104a and 104b) along the A-pillars 110a and 110b in the vehicle width direction. Inflators and the like for supplying gas are also stowed together with the airbag cushions 112a and 112b in these housings 114a and 114b.

In addition, the vehicle is also provided with an airbag device 116 as another pedestrian protection airbag device. The airbag device 116 is configured such that an airbag cushion (not illustrated) is stowed in a housing installed underneath the front hood 104 from where the airbag cushion expands and deploys toward a windshield 108.

The pedestrian protection airbag device 100 is equipped with a sensor, (not illustrated), at a location where a leg or the like of a pedestrian is likely to come into contact, for example, inside the vicinity of a front bumper 106. When the sensor detects contact with a pedestrian, an activation signal is transmitted to the inflator (not illustrated), which is a gas generating device, via a controller or the like, and the airbag cushions 112a and 112b are designed to expand and deploy as in FIG. 1(b).

The airbag cushions 112a and 112b illustrated in FIG. 1(b) expand and deploy in an elongated form that extends from near the respective lower end parts of the pillars 110a and 110b on the left and right along the A-pillars 110a and 110b and in the front-to-back direction of the vehicle along the end part of the front hood 104 in the vehicle width direction. With this configuration, the airbag cushions 112a and 112b catch a pedestrian about to make contact with the vehicle from the front corners 104a and 104b at the front to the A-pillars 110a and 110b. The airbag cushions 112a and 112b are bag-shaped and surfaces thereof are formed of a plurality of fabrics that are overlapped and sewn or adhered, spun and woven using OPW (one-piece woven) construction, or the like.

In addition, the airbag cushions 112a and 112b also take on a configuration that lifts up and slightly lifts the front hood 104. This action has the effect of softening the impact on pedestrians who come in contact with the front hood 104.

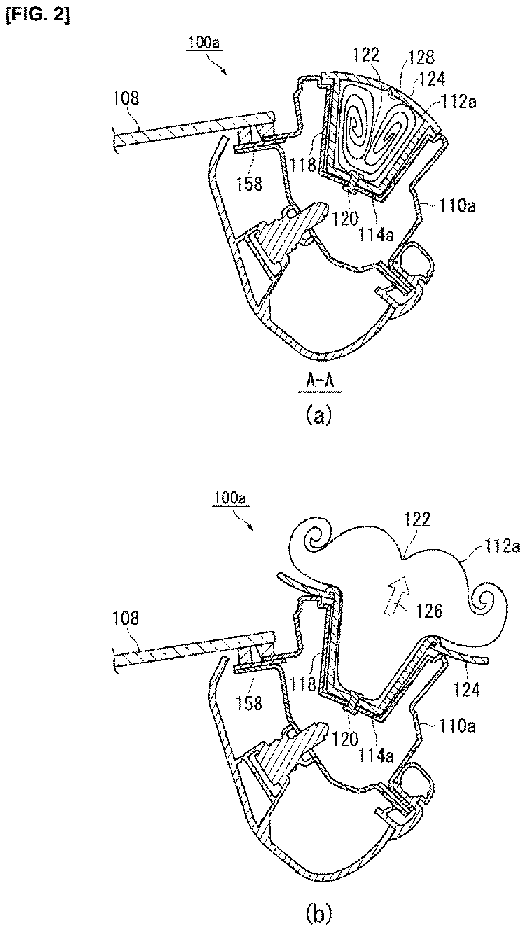

FIG. 2 is a diagram illustrating an appearance of the expansion and deployment of the airbag cushion 112a in FIG. 1(a). FIG. 2(a) is a cross section view along A-A of the airbag device 100a in FIG. 1(a). The housing 114a is installed such that a main body part 118 for stowing an airbag cushion 112 is embedded in the A-pillar 110a, and the airbag cushion 112a is secured to a bottom portion of the main body part 118 using a rivet 120 or the like.

The airbag cushion 112a of the present Embodiment is stowed in the vehicle in a stowed form, being contracted by rolling or folding from both ends toward the center in the transverse direction of the airbag cushion 112a and formed into an inward fold 122 at the center in a V-shape. The V-shaped inward fold 122 of the airbag cushion 112a in the stowed form refers to a state of the inward fold 122 when viewed from the outside of the vehicle, that is, a state folded so as to be indented to the inside the vehicle. For example, when an area of the airbag cushion 112a that is stowed in the A-pillar 110a is folded so as to face downward, the leading end of the V-shape being toward the inside the vehicle, and toward the rear of the vehicle, and an area stowed at a side of the front hood 104 (FIG. 1(a)) are folded such that the leading end faces downward. Furthermore, the airbag cushion 112a is stowed such that this inward fold 122 side faces a lid 124, which is a cover of the housing 114a.

FIG. 2(b) is a diagram illustrating the initial action of the expansion and deployment of the airbag cushion 112a in FIG. 2(a). When gas is supplied from the inflator (not illustrated) to the airbag cushion 112a in the stowed form described above (see FIG. 2(a)), the airbag cushion 112a starts expanding and deploying, and action toward the outside of the vehicle (arrow 126) first occurs as the inward fold 122 attempts to release. This action allows the lid 124 of the housing 114a, which is the stowing part of the airbag cushion 112a, to efficiently be pushed aside during deployment.

Here, as illustrated in FIG. 2(a), the lid 124 of the housing 114 includes a fragile part 128 that faces the inward fold 122 at a position of the inward fold 122 of the airbag cushion 112a in the stowed form toward the outside of the vehicle. The fragile part 128 can be achieved, for example, by providing a groove-like tear line near the center of the lid 124 in the vehicle width direction, being an area that can be cleaved by a force of the expansion and deployment of the airbag cushion 112a. According to this configuration, as illustrated in FIG. 2(b), the starting of expansion and deployment toward the outside of the vehicle of the airbag cushion 112a efficiently applies a force (arrow 126) to the fragile part 128, induces cleavage of the lid 124 via the fragile part 128, and is able to smoothly open the lid 124.

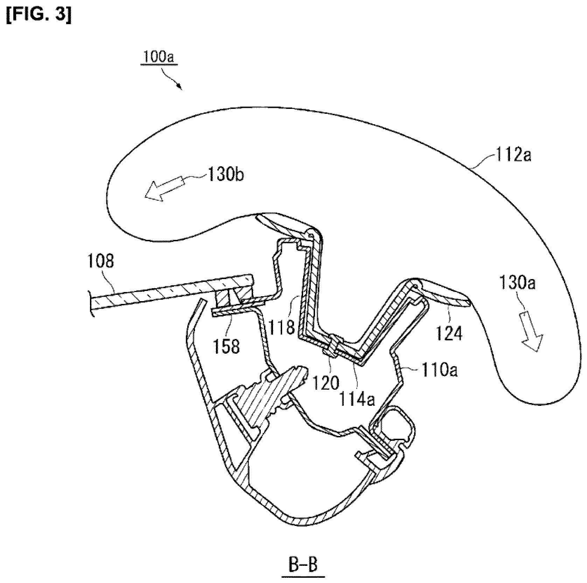

FIG. 3 is a cross section view along A-A of the airbag device 100a in FIG. 1(a). After cleaving the lid 124, the airbag cushion 112a further expands and deploys, unfolding from the center to both sides (arrows 130a and 130b) in the vehicle width direction such that the inward fold 122 (see FIG. 2(b)) releases. In particular, both V-shaped sides, which face each other, deploy, pushing against each other while expanding.

Similar to these, both V-shaped sides of the airbag cushion 112a deploy facing the outside of the vehicle (arrow 126 in FIG. 2(b)) to both sides in the vehicle width direction (arrows 130a and 130b in FIG. 3) in a manner of pushing against each other while unfolding. With this configuration, the airbag cushion 112a efficiently expands and deploys so as to cover from the highly rigid corners 104a and 104b (see FIG. 1(a)) of the front hood 104 to the A-pillars 110a and 110b, including even a vicinity of the side mirror 132, which enables protection of pedestrians and the like.

The airbag cushion 112a expands and deploys in a shape so as to fit onto the A-pillar 110a and the corner 104a of the front hood 104, thereby enabling restricted oscillation relative to the A-pillar 110a and the like. In addition, the airbag cushions 112a and 112b do not block the field of vision of an occupant due to expanding and deploying in a localized manner along the A-pillars 110a and 110b and the like (see FIG. 1(b)). Therefore, the pedestrian protection airbag device 100 is capable of efficiently protecting pedestrians via a simple configuration and further contributing to occupant safety as well.

In the present Embodiment, as illustrated in FIG. 1(a), the housings 114a and 114b are respectively provided along the A-pillars 110a and 110b in the vehicle width direction from the vicinity of the end parts of the front hood 104. However, the housings are not limited to this configuration, and can be configured so as to only be installed in the vehicle width direction in the vicinity of the end parts of the front hood 104 or can be configured so as to only be installed on the A-pillars 110a and 110b.

### Modified Example

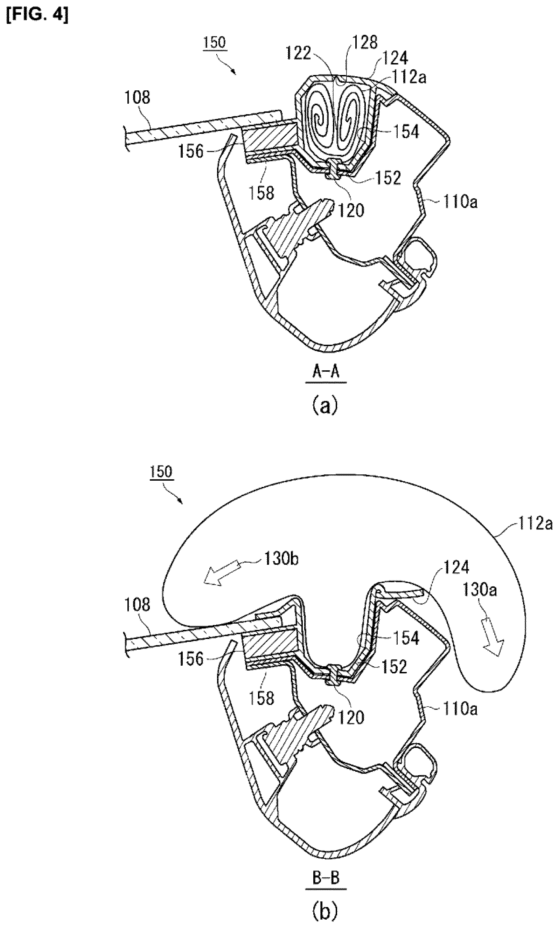

FIG. 4 is a diagram illustrating a modified example of the airbag device 100a (an airbag device 150) in FIG. 2(a). Hereinafter, the same codes are attached to the same structural elements as those described above, and a description of the aforementioned structural elements is omitted. In the following description, structural elements having the same name as a component already described are assumed to have the same function unless otherwise specified, even if marked with a different sign.

FIG. 4(a) is a diagram illustrating the airbag device 150 according to FIG. 2(a). The configuration of the airbag device 150 differs from that of the airbag device 100a in FIG. 2(a) in that a cushioning part 156 is provided in a housing 152. The housing 152 has a configuration roughly divided into a main body part 154 and the cushioning part 156, which extends from the main body part 154 to the windshield 108 side.

The main body part 154 is installed inside the A-pillar 110a and stows the airbag cushion 112a in the stowed form. The cushioning part 156 extends from the main body part 154, and is inserted between the windshield 108 and a rear support part 158 of the A-pillar 110a that includes supports to the end part of the windshield 108 from the rear direction of the vehicle. The cushioning part 156 is configured including, for example, a highly elastic resin material.

FIG. 4(b) is a diagram illustrating the airbag device 150 according to FIG. 3. According to the airbag device 150, a force when a pedestrian or the like makes contact with the windshield 108 is absorbed by the cushioning part 156, allowing an impact exerted upon the pedestrian or the like to be softened. In addition, the cushioning part 156 absorbs the impact during expansion and deployment of the airbag cushion 112a while the housing 152 is sandwiched between the A-pillar 110a and the windshield 108, which is also useful in increasing installation rigidity of the housing 152 and the airbag cushion 112a.

FIG. 5 is a diagram illustrating a second modified example of the airbag device 100a (airbag device 200) in FIG. 1(a). The configuration of the airbag device 200 differs from that of the airbag device 100a in FIG. 1(a) in that a housing 204 installed along an A-pillar 202 is provided.

The housing 204 has a C-shaped cross-section, has an airbag cushion 206 in a stowed form stowed thereinside, and is installed along the windshield 108 (left side in FIG. 5) side of the A-pillar 202.

As with the airbag cushion 112a (see FIG. 1(b)), the airbag cushion 206 expands and deploys so as to cover the A-pillar 202 and the corner 104a at the front of the vehicle. The airbag cushion 206 is also contracted by rolling or folding from both ends in the transverse direction toward the center, and is further stowed in the housing 204 in the stowed form in which the inward fold 122 is formed in a V-shape in the center.

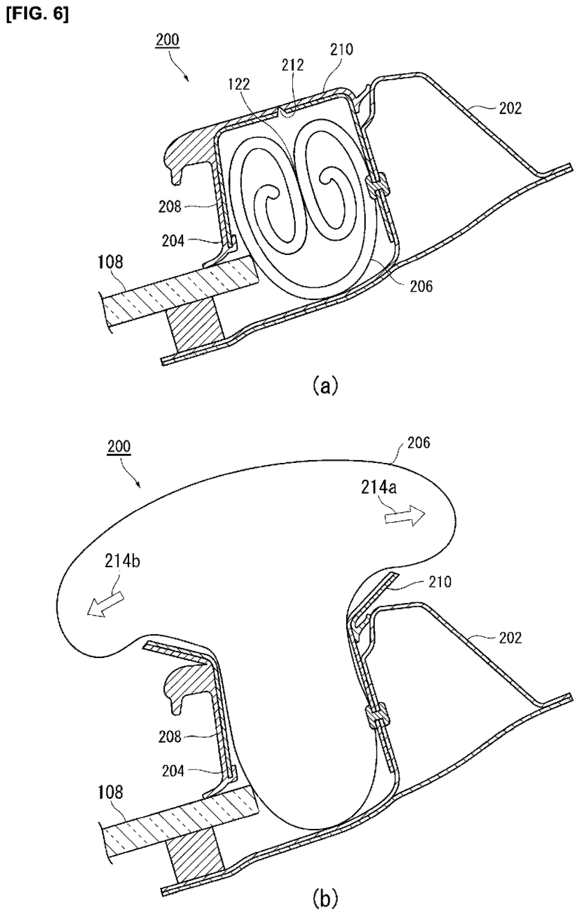

FIG. 6 is a diagram illustrating an example of how the airbag cushion 206 in FIG. 5 expands and deploys. FIG. 6(a) is a cross section view of the airbag device 200 in FIG. 5 corresponding to FIG. 2(a).

The housing 204 extends along the A-pillar 202 and is configured to include the main body part 208 for stowing the airbag cushion 206 and a lid 210 on the outward side of the vehicle for sealing the main body part 208. The lid 210 is a portion of the housing 204 that faces the outside of the vehicle and extends in the longitudinal direction of the A-pillar 202 so as to be flush with the A-pillar 202.

The lid 210 is provided with a fragile part 212 that can be cleaved by expansion pressure of the airbag cushion 206. The fragile part 212 is provided as a carved-out groove-like area inside the lid 210 that is cleaved by the force of the expansion and deployment of the airbag cushion 206 to open the lid 210. The fragile part 212 is provided at the center of the lid 210 in the width direction and along the lid 210 in the longitudinal direction.

As with the airbag cushion 112a (see FIG. 2(a)), the airbag cushion 206 is also stowed in the housing 204 in a state such that a V-shaped leading end side is in a folded state facing downward that is toward the inside of the vehicle as well in the direction of the rear of the vehicle with respect to the A-pillar 202. In particular, the lid 210 side of the airbag cushion 206 in the stowed form is folded in the V-shape so as to form the inward fold 122, and is stowed such that the inward fold 122 faces the fragile part 212.

FIG. 6(b) is an illustration of how the airbag device 200 in FIG. 6(a) expands and deploys. After cleaving the lid 210, the airbag cushion 206 further expands and deploys, unfolding from the center to both sides (arrows 214a and 214b) in the vehicle width direction such that the inward fold 122 (see FIG. 6(b)) releases. In particular, both V-shaped sides, which face each other, deploy, pushing against each other while expanding.

As with the airbag cushion 112a in FIG. 2(b) and FIG. 3, both V-shaped sides of the airbag cushion 206 also deploy facing the outside of the vehicle (arrow 126 in FIG. 2(b)) and to both sides in the vehicle width direction (arrows 130a and 130b in FIG. 3) so as to push against each other while unfolding. With this configuration, the airbag cushion 206 efficiently expands and deploys so as to cover from the highly rigid corner 104a (see FIG. 1(a)) of the front hood 104 to the A-pillar 202, including even a vicinity of the side mirror 132, which enables protection of pedestrians and the like.

### Embodiment 2

FIG. 7 is a diagram illustrating an outline of the pedestrian protection airbag device (hereinafter referred to as an airbag device 220) according to Embodiment 2 of the present invention. FIG. 7(a) is a diagram illustrating a vehicle before the airbag device 220 is activated, and FIG. 7(b) is a diagram illustrating the vehicle when the airbag device 220 is activated.

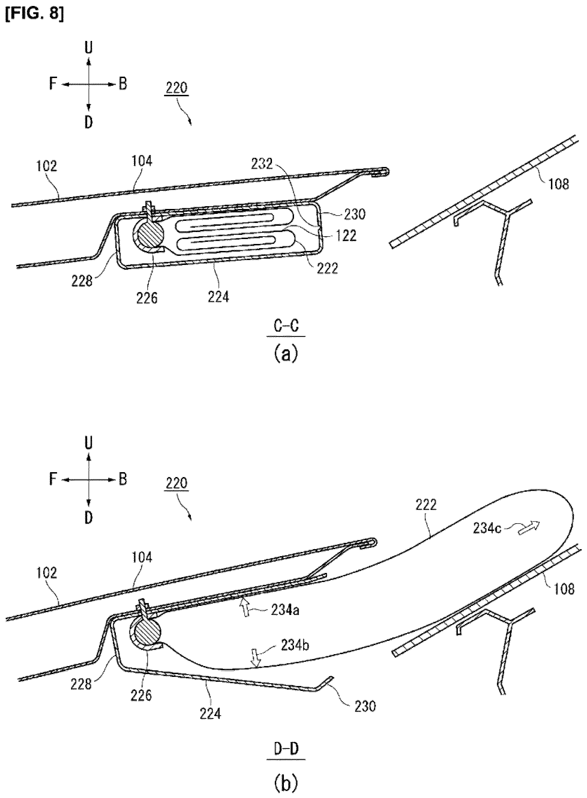

As illustrated in FIG. 7(a), the airbag device 220 is installed underneath the front hood 104 of the vehicle 102. When contact between the vehicle 102 and a pedestrian is predicted or detected by a sensor (not illustrated), the airbag device 220 activates an inflator 226 (see FIG. 8(a)) via a controller, and as illustrated in FIG. 7(b), expands and deploys an airbag cushion 222 from underneath the front hood 104 toward the windshield 108.

As illustrated in FIG. 7(a), the airbag device 200 is provided with a housing 224 for stowing the airbag cushion 222. The housing 224 is an elongated box-shaped container formed primarily of resin, and is for storing the airbag cushion 222 (see FIG. 8(a)), the inflator 226, and the like. The housing 224 is mounted on the lower surface of the front hood 104 via a special bracket or the like, with the longitudinal direction thereof facing the vehicle width direction.

As illustrated in FIG. 7(b), the airbag cushion 222 in the present Embodiment expands and deploys so as to cover the windshield 108 and the A-pillars 110a and 110b on the left and right to catch a pedestrian about to make contact with the windshield 108. In addition, the airbag cushion 222 lifts up and suspends the front hood 104. This action has the effect of softening the impact on pedestrians who come in contact with the front hood 104.

FIG. 8 is a diagram illustrating how the airbag cushion 222 in FIG. 7(a) expands and deploys. FIG. 8(a) is a cross section view along C-C of the side airbag device 220 in FIG. 7(a).

The housing 224 is provided underneath the front hood 104 on the windshield 108 side. The housing 224 extends in the vehicle width direction and is configured including a main body part 228 for stowing the airbag cushion 222 and a lid 230 primarily for sealing the main body part 228 on the rear side of the vehicle.

The housing 224 is provided with a fragile part 232 that can be cleaved by an expansion pressure of the airbag cushion 222. The fragile part 232 is provided as a groove-shaped portion engraved on the inner side of the housing 224, and is provided mainly in the lid 230 on the rear side of the vehicle so as to extend in the vehicle width direction.

The airbag cushion 222 is stowed in the housing 224 in a state such that a V-shaped leading end is folded facing toward the front of the vehicle. In particular, the airbag cushion 222 in a stowed state is folded in a V-shape such that an inward fold 122 folds toward the rear side of the vehicle, and is stowed such that the inward fold 122 faces the fragile part 232.

FIG. 8(b) is a cross section view along D-D of the airbag device 220 in FIG. 7(b). The airbag cushion 222 utilizes pressure from the gas supplied by the inflator 226 to cleave the fragile part 232 of the housing 224 and expand and deploy to the rear of the vehicle.

Both V-shaped sides (see FIG. 8(a)) of the airbag cushion 222 deploy facing upward (arrow 234a) and downward (arrow 234b) so as to push against each other while unfolding. With this configuration, the airbag cushion 222 expands and deploys to the rear of the vehicle (arrow 234c) while pushing out the lid 230 of the cleaved housing 224 so as to cover the windshield 108, which protects pedestrians and the like. In addition, the airbag cushion 222 lifts up and suspends the front hood 104 via the force of the arrow 234a, allowing an impact exerted upon a pedestrian or the like that makes contact with the front hood 104 to be softened.

### (Embodiment 3)

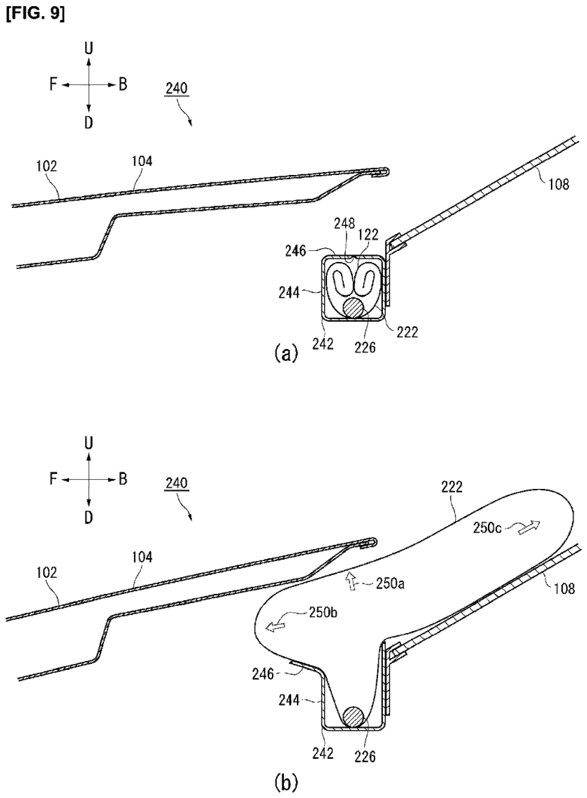

FIG. 9 is a diagram illustrating an outline of the pedestrian protection airbag device (hereinafter, airbag device 240) according to Embodiment 3 of the present invention. FIG. 9(a) is a diagram illustrating a vehicle 102 before the pedestrian airbag device 240 is activated, and FIG. 9(b) is a diagram illustrating the vehicle 102 when the pedestrian airbag device 240 is activated.

A housing 242 is installed along a lower edge of the windshield 108. The housing 242 is installed, for example, in a cowl part or the like, which supports the lower edge of the windshield 108.

The housing 242 extends in the vehicle width direction and is configured to include a main body part 244 for stowing the airbag cushion 222 and a lid 246 for sealing the main body part 244.

The lid 246 is provided with a fragile part 248 that can be cleaved by expansion pressure of the airbag cushion 222. The fragile part 248 may be provided as a carved-out groove-shaped area inside the lid 246, mainly provided on the lid 246 so as to extend in the vehicle width direction.

The airbag cushion 222 is stowed in the housing 242 in a state such that a V-shaped leading end is folded facing downward. In particular, the airbag cushion 222 in the stowed form is folded in the V-shape by the lid 246 side so as to form the inward fold 122, and is stowed such that the inward fold 122 faces the fragile part 248.

FIG. 9(b) illustrates how the airbag device 240 in FIG. 9(a) expands and deploys. The airbag cushion 222 utilizes pressure from the gas supplied by the inflator 226 to cleave the fragile part 248 of the housing 242 and expand and deploy toward the rear of the vehicle.

While expanding upward from the housing 242 (arrow 250a), the two V-shaped sides of the airbag cushion 222 deploy facing toward the front of the vehicle (arrow 250b) and toward the rear of the vehicle (arrow 250c), pushing against each other while unfolding. With this configuration, the airbag cushion 222 pushes out the lid 246 of the cleaved housing 242, lifts up and suspends the front hood 104 via expansion and deployment in the directions of the arrows 250a and 250b, and covers the windshield 108 by expanding and deploying in the direction of the arrow 250c. As a result, the airbag device 240 is capable of protecting pedestrians and the like who are likely to make contact with the front hood 104 and the windshield 108.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings.

Therefore, it is obvious that a person with ordinary skill in the art can conceive various changed examples or modified examples within the scope described in the scope of the claims.

### Industrial Applicability

The present invention can be used in a pedestrian protection airbag device provided with airbag cushions that expand and deploy along the A-pillars of a vehicle.

### Explanation of Codes

100. Pedestrian protection airbag device, 100a, 100b. Airbag devices, 102. Vehicle, 104. Front hood, 104a, 104b. Corners, 106. Front bumper, 108. Windshield, 110a, 110b. A-pillar, 112a, 112b. Airbag cushion, 114a, 114b. Housing, 116. Airbag device, 118. Main body part, 120. Rivet, 122. Inward fold, 124. Lid, 126. Arrow, 128. Fragile part, 130a, 130b. Arrow, 150. Airbag device, 152. Housing, 154. Main body part, 156. Cushioning, 158. Rear support, 200. Airbag device, 202. A-pillar, 204. Housing, 206. Airbag cushion, 208. Main body part, 210. Lid, 212. Fragile part, 214a, 214b. Arrow, 220. Airbag device, 222. Airbag cushion, 224. Housing, 226. Inflator, 228. Main body part, 230. Lid, 232. Fragile part, 234a to 234c. Arrow, 240. Airbag device, 242. Housing, 244. Main body part, 246. Lid, 248. Fragile part, 250a to 250c. Arrow

## Claims

1. A pedestrian protection airbag device (100), comprising:
airbag cushions (112a, 112b,206,222) that are stowed from in the vehicle width direction at end part of a front hood (104) to the A-pillars (110a,110b,202), and
that expand and deploy in an elongated form in the front-to-back direction of the vehicle (102) at least along the A-pillars (110a,110b,202), wherein
the airbag cushions (112a, 112b,206,222) are stowed in the vehicle (102) in a stowed form, being wound or folded toward the center in the transverse direction of the airbag cushions (112a,112b,206,222) and inward folded at the center in a V-shape, wherein
the airbag cushions (112a, 112b,206,222) respectively expand and deploy from respective lower end parts of the left and right A-pillars (110a, 110b,202) along the A-pillars (110a,110b,202) **in an elongated form** and in the vehicle width direction at end parts of the front hood (104) so as to extend in the front-to-back direction of the vehicle (102) **in a configuration that lifts up the front hood (104),** wherein
the airbag cushions (112a,112b,206,222) in the stowed form are stowed such that a leading end of the V-shape faces downward in the vehicle (102), wherein the airbag cushions (112a, 112b,206,222) in the stowed form expand and deploy by unfolding from the center in the transverse direction to both sides in the vehicle width direction such that the inward fold (122) is released.

2. The pedestrian protection airbag device (100) according to claim 1, the pedestrian protection airbag device (100) further comprising: housings (114a, 114b, 152,204,224,242) for stowing the airbag cushions (112a,112b,206,222) in the stowed form, which are installed in the vehicle (102); the housings (114a, 114b, 152,204,224,242) including a main body part (118,154,208,228,244) for stowing the airbag cushions (112a,112b,206,222) in the stowed form, which is installed inside the A-pillars (110a,110b,202), and lids (124,210,230,246) for sealing the main body part (118,154,208,228,244); and the lids (124,210,230,246) include a fragile part (128,212,232,248) that can be cleaved by a force of the expansion and deployment of the airbag cushions (112a,112b,206,222).

3. The pedestrian protection airbag device (100) according to claim 2, wherein the fragile part (128,212,232,248) is provided near the center of the lid (124,210,230,246) in the vehicle width direction.

4. The pedestrian protection airbag device (100) according to claim 2 or 3, wherein the A-pillars (110a,110b,202) include support to the windshield (108) from the rear direction of the vehicle (102), and the housings (114a,114b,152,204,224,242) further include a cushioning part (156) that extends from the main body part (118,154,208,228,244) and is inserted between the rear supports (158) and the windshield (108).

## Patentansprüche

1. Fußgängerschutzairbagvorrichtung (100), umfassend:
Airbagkissen (112a, 112b, 206, 222), die in der Fahrzeugbreitenrichtung an einem Endteil einer Fronthaube (104) zu den A-Säulen (110a, 110b, 202) verstaut sind, und
die sich in einer länglichen Form in der Längsrichtung des Fahrzeugs (102) mindestens entlang der A-Säulen (110a, 110b, 202) ausdehnen und entfalten, wobei
die Airbagkissen (112a, 112b, 206, 222) in dem Fahrzeug (102) in einer verstauten Form verstaut sind, wobei sie in der Querrichtung der Airbagkissen (112a, 112b, 206, 222) zu der Mitte hin gewickelt oder gefaltet und in der Mitte V-förmig nach innen gefaltet sind, wobei
wobei sich die Airbagkissen (112a, 112b, 206, 222) jeweils von jeweiligen unteren Endteilen der linken und rechten A-Säulen (110a, 110b, 202) entlang den A-Säulen (110a, 110b, 202) **in einer länglichen Form** und in der Fahrzeugbreitenrichtung an Endteilen der Fronthaube (104) ausdehnen und entfalten, um sich in der Längsrichtung des Fahrzeugs (102) **in einer Konfiguration zu erstrecken, die die Fronthaube (104) anhebt,** wobei
die Airbagkissen (112a, 112b, 206, 222) in der verstauten Form derart verstaut sind, dass ein vorderes Ende der V-Form nach unten in das Fahrzeug (102) weist, wobei sich die Airbagkissen (112a, 112b, 206, 222) in der verstauten Form ausdehnen und entfalten, durch ein derartiges Auffalten von der Mitte in der Querrichtung zu beiden Seiten in der Fahrzeugbreitenrichtung, dass die Innenfalte (122) freigegeben wird.

2. Fußgängerschutzairbagvorrichtung (100) nach Anspruch 1, die Fußgängerschutzairbagvorrichtung (100) ferner umfassend: Gehäuse (114a, 114b, 152, 204, 224, 242) zum Verstauen der Airbagkissen (112a, 112b, 206, 222) in der verstauten Form, die in dem Fahrzeug (102) installiert sind; wobei die Gehäuse (114a, 114b, 152, 204, 224, 242) einen Hauptkörperteil (118, 154, 208, 228, 244) zum Verstauen der Airbagkissen (112a, 112b, 206, 222) in der verstauten Form, der innerhalb der A-Säulen (110a, 110b, 202) installiert ist, und Deckel (124, 210, 230, 246) zum Abdichten des Hauptkörperteils (118, 154, 208, 228, 244) einschließen; und die Deckel (124, 210, 230, 246) einen zerbrechlichen Teil (128, 212, 232, 248) einschließen, der durch eine Kraft der Ausdehnung und Entfaltung der Airbagkissen (112a, 112b, 206, 222) gespalten werden kann.

3. Fußgängerschutzairbagvorrichtung (100) nach Anspruch 2, wobei der zerbrechliche Teil (128, 212, 232, 248) in der Nähe der Mitte des Deckels (124, 210, 230, 246) in der Fahrzeugbreitenrichtung bereitgestellt ist.

4. Fußgängerschutzairbagvorrichtung (100) nach Anspruch 2 oder 3, wobei die A-Säulen (110a, 110b, 202) eine Stütze der Windschutzscheibe (108) von der Rückseite des Fahrzeugs (102) einschließen und die Gehäuse (114a, 114b, 152, 204, 224, 242) ferner einen gepolsterten Teil (156) einschließen, der sich von dem Hauptkörperteil (118, 154, 208, 228, 244) erstreckt und zwischen den hinteren Stützen (158) und der Windschutzscheibe (108) eingesetzt ist.

## Revendications

1. Dispositif de coussin de sécurité gonflable de protection de piétons (100), comprenant :
des coussins de sécurité gonflable (112a, 112b, 206, 222) qui sont rangés dans la direction de largeur de véhicule à l'extrémité d'un capot avant (104) vers les montants A (110a, 110b, 202), et
qui s'étendent et se déploient sous une forme allongée dans la direction avant-arrière du véhicule (102) au moins le long des montants A (110a, 110b, 202), dans lequel
les coussins de sécurité gonflable (112a, 112b, 206, 222) sont rangés dans 'e véhicule (102) sous une forme rangée, étant enroulés ou pliés vers le centre dans la direction transversale des coussins de sécurité gonflable (112a, 112b, 206, 222) et repliés vers l'intérieur au centre en forme de V, dans lequel
les coussins de sécurité gonflable (112a, 112b, 206, 222) s'étendent et se déploient respectivement à partir des parties inférieures respectives des montants A gauche et droit (110a, 110b, 202) le long des montants A (110a, 110b, 202) **dans une** forme allongée **forme allongéeet** dans le sens de la largeur du véhicule, aux extrémités du capot avant (104), de manière à s'étendre dans le sens avant-arrière du véhicule (102) **dans une configuration qui soulève le capot avant (104),** dans lequel
les coussins de sécurité gonflable (112a, 112b, 206, 222) dans la forme rangée sont rangés de telle sorte qu'une extrémité avant de la forme en V est orientée vers le bas dans le véhicule (102), dans lequel les coussins de sécurité gonflable (112a, 112b, 206, 222) dans la forme rangée se dilatant et se déployant en se dépliant du centre dans la direction transversale vers les deux côtés dans la direction de la largeur du véhicule, de telle sorte que le pli vers l'intérieur (122) est libéré.

2. Dispositif de coussin de sécurité gonflable de protection de piétons (100) selon la revendication 1, le dispositif de coussin de sécurité gonflable de protection de piétons (100) comprenant en outre : des boîtiers (114a, 114b, 152, 204, 224, 242) pour ranger les coussins de sécurité gonflable (112a, 112b, 206, 222) dans la forme rangée, qui sont installés dans le véhicule (102) ; les boîtiers (114a, 114b, 152, 204, 224, 242) comportent une partie de corps principale (118, 154, 208, 228, 244) pour ranger les coussins de sécurité gonflable (112a, 112b, 206, 222) dans la forme rangée, qui est installée à l'intérieur des montants A (110a, 110b, 202), et des couvercles (124, 210, 230, 246) pour sceller la partie principale (118, 154, 208, 228, 244) ; et les couvercles (124, 210, 230, 246) comportent une partie fragile (128, 212, 232, 248) qui peut être coupée par la force d'expansion et de déploiement des coussins de sécurité (112a, 112b, 206, 222).

3. Dispositif de coussin de sécurité gonflable de protection de piétons (100) selon la revendication 2, dans lequel la partie fragile (128, 212, 232, 248) est prévue près du centre du couvercle (124, 210, 230, 246) dans la direction de largeur de véhicule.

4. Dispositif de coussin de sécurité gonflable de protection de piétons (100) selon la revendication 2 ou 3, dans lequel les montants A (110a, 110b, 202) comportent un support pour le pare-brise (108) à partir de la direction arrière du véhicule (102), et les boîtiers (114a, 114b, 152, 204, 224, 242) comportent en outre une partie de rembourrage (156) qui s'étend à partir de la partie principale de corps (118, 154, 208, 228, 244) et est insérée entre les supports arrière (158) et le pare-brise (108).
